# EUROPEAN PATENT SPECIFICATION

(11) **EP 4 356 020 B1**
(45) Date of publication and mention of the grant of the patent: **30.04.2025**
(21) Application number: 22732539.6
(22) Date of filing: 10.06.2022
(51) Int. Cl.: F16D 66/00

(54) **SENSOR-EQUIPPED BRAKE PAD WITH PRINTED CIRCUIT BOARD WITH STIFFENING MEANS**
BREMSBELAG MIT SENSOR MIT EINER LEITERPLATTE MIT VERSTEIFUNGSMITTELN
PATIN DE FREIN ÉQUIPÉ D'UN CAPTEUR AVEC CARTE À CIRCUIT IMPRIMÉ DOTÉE DE MOYENS DE RAIDISSEMENT

(30) Priority: 03.08.2021 IT 202100021020
(43) Date of publication of application: 24.04.2024
(73) Proprietor: ITT Italia S.r.l., 20020 Lainate (IT)
(72) Inventor: TERRANOVA, Marco, 10149 Torino (IT); SERRA, Stefano, 12037 Saluzzo (Cuneo) (IT); MILANI, Gianmaria, 10060 Candiolo (Torino) (IT); ZANGARI, Cesare, 10064 Pinerolo (Torino) (IT)
(74) Representative: Rapisardi, Mariacristina
(86) International application number: PCT/EP2022/065871
(87) International publication number: WO 2023/011783

(56) References cited:
- EP-A1- 3 289 238
- US-A1- 2017 234 383

## Description

The present invention relates to a sensor-equipped brake pad for the braking system of a motor vehicle, comprising a printed circuit board.

Sensor-equipped brake pads for the braking system of a motor vehicle, which are equipped with sensors, typically force sensors, by means of piezoelectric and temperature elements, which detect the mechanical and thermal characteristics of the pad during the activation of the braking system and transmit the data to an on-board computer system that provides the processing and transformation of the information into a system useful for vehicle driving and safety, have been known for some time.

The data detected by the sensors, transformed into suitable electrical signals, are transmitted to the central system through electrical connections, typically represented by a printed circuit supported by a board; in the jargon, the acronym PCB (Printed Circuit Board).

The board is traditionally disposed between a rigid rear support plate and the block of friction braking material, in contact with which the sensors that detect the conditions thereof are disposed.

Printed circuits and sensors are known which are obtained directly and in an integrated manner by silk-screen printing the following suitably superimposed elements: the final thicknesses of the circuit are extremely limited and the circuit alone does not have mechanical characteristics of resistance to the high stresses to which it would be subjected during the operating activity of the braking circuit.

The printed circuit is therefore traditionally combined with a board having suitable physical and mechanical characteristics which enables its handling, positioning and use in the sensor-equipped pad assembly.

The PCB then integrates the (piezoelectric and temperature) sensors characteristic of a sensor-equipped brake pad, in the jargon, Smart Pad, into a small compact board with conductive tracks and an interconnection region.

For industrialization and high-volume mass production of Smart Pads, cost, size and production process are essential.

The PCB enables a production process adapted to large-scale production; a critical aspect of the production process is how to integrate the PCB inside a brake pad to manufacture a smart brake pad.

Piezoelectric sensors are sensitive to the support on which they are fixed.

In particular, if the support is not sufficiently rigid or is not properly integrated into the Smart Pad assembly, a compressive stress could induce a certain strain of the piezoelectric sensor which is transmitted and read as tensile stress, rather than compressive stress.

It is known that a suitable integration of the PCB in the Smart Pad also plays an important role in protecting the board against the external environment, in the efficiency and in the duration and reliability of the detections: moisture, dust, presence of saline solutions in marine areas, and debris may damage the board when the Smart Pad is used extensively in the harsh environment in which it is expected to operate.

Traditionally, the PCB is fixed to the rear plate, which is suitably machined to obtain a specific recess having a shape mating with that of the board to be inserted.

Once inserted in the recess, the board is fixed to the edges by multiple welding or mechanical riveting points disposed along the entire perimeter.

These fixing systems are notoriously not very effective, since they do not ensure the complete adherence of the board to the rear plate.

This is known to cause at least two types of problem: specifically, the pressure force signal inversion, due to the initial failure of the bottom of the board, subjected to the pressure of the friction material engaged in the braking, toward the bottom of the housing recess in the rear plate before reaching the complete adherence under stress.

Another type of problem is the possibility that moisture, dust and dirt enter the gap left between the board and the bottom of the housing recess in the rear plate, nullifying the efficiency, safety and duration of the measurements.

Document US2017234383 A1 discloses a sensorized braking element, wherein an electric circuit and a piezoelectric sensor are mechanically fixed integral with a first surface of a supporting metal element of a brake pad.

Therefore, there is a need to improve the known characteristics of a sensor-equipped brake pad comprising a printed circuit board.

The technical task that the present invention proposes is, therefore, to produce a sensor-equipped brake pad comprising a printed circuit board that makes it possible to eliminate the lamented technical drawbacks of the known art.

Within the scope of this technical task, an object of the invention is to produce a sensor-equipped brake pad comprising a printed circuit board that ensures the adherence of the board to the rear plate in the areas of interest.

Another object of the invention is to produce a sensor-equipped brake pad comprising a printed circuit board that ensures a greater resistance to deformation of the board under the operating stresses of the braking system.

The technical task, as well as these and other objects, according to the present invention, are achieved by producing a sensor-equipped brake pad for the braking system of a motor vehicle, comprising a printed circuit board, a rear support plate having a recess in which said board is fixed, at least one force sensor mounted on said board, a block of friction material mounted on said rear plate, wherein said board is interposed between said rear plate and said block of friction material, characterized in that it provides structural stiffening means for stiffening said board.

In a preferred embodiment, said recess has a bottom wall and a side wall, said printed circuit board has a rear face delimiting a gap with said rear wall, and said structural stiffening means are configured and disposed to at least partly occupy said gap.

In a further preferred embodiment, said structural stiffening means are configured and disposed to rigidly connect said board to said rear wall.

In a further preferred embodiment, said structural stiffening means comprise a rigid substrate of the board.

In a further preferred embodiment, said structural stiffening means comprise a filler material for filling said gap.

In a further preferred embodiment, said structural stiffening means comprise one or more discrete elements.

Said discrete elements may preferably be located at least at said at least one sensor.

In a further preferred embodiment, said structural stiffening means comprise one or more discrete fixing points.

Said one or more discrete fixing points preferably may surround said at least one force sensor. Other characteristics of the present invention are also defined in the following claims.

Further characteristics and advantages of the invention will become better apparent from the description of a preferred but not exclusive embodiment of a sensor-equipped brake pad comprising a printed circuit board according to the invention, illustrated only by way of non-limitative example in the accompanying drawings, wherein:
figure 1 shows a schematic view of a sensor-equipped brake pad;
figure 2 shows a view of the inner face of the rear plate comprising a printed circuit board according to the known art;
figure 3 shows a partial schematic section of a rear plate comprising a printed circuit board;
figure 4 shows an embodiment of the stiffening means;
figure 5 shows an embodiment of the stiffening means;
figure 6 shows an embodiment of the stiffening means;
figure 7 shows an embodiment of the stiffening means;
figure 8 shows a finite element model simulation of the effect of a normal force of fixed intensity on a bare piezoelectric force sensor;
figure 9 shows a finite element model simulation of the effect of a compression force of fixed intensity on a piezoelectric force sensor mounted on a steel plate deformable by the effect of normal force, wherein the compression force in the z direction results in a strain in the y direction;
figure 10 shows a finite element model simulation of the effect of a normal force of time-varying intensity on a piezoelectric force sensor mounted on a printed circuit board provided with a stainless-steel support fixed perimetrically by spot welding to a rear support metal plate, ideally rigid and separated by a 20-micron gap from the stainless-steel support;
figure 11 shows a simulation of the signal generated by the piezoelectric force sensor as the thickness of the printed circuit board support varies.

With reference to the above figures, a sensor-equipped brake pad for a braking system of a motor vehicle, generally denoted by the reference number 1, is shown.

The sensor-equipped brake pad 1 typically comprises a rear support plate 100, a printed circuit board 200, and a block of friction material 300 mounted on the rear plate 100.

Potentially, a damping layer interposed between the block of friction material 300 and the printed circuit board 200, is provided.

The board 200 has at least one piezoelectric force sensor 201 and possibly at least one temperature sensor 202, which are electrically connected through conductive traces 203 in the printed circuit 220 to the electrical interconnection systems formed, e.g., by connectors 210 for connecting to the on-board computer system of the vehicle.

Typically, the sensors and the conductive traces of the printed circuit 220 are produced by successive silk-screen printing operations.

The board 200 also has a support 230 made of suitable rigid material, e.g. not necessarily stainless steel, which gives it the shape, size, protection and handling characteristics necessary for the implementation and use of the board 200 in the sensor-equipped brake pad 1.

The support 230 of the board 200 has a rear face 231.

The rear support plate 100 has a recess 110 with a shape mating with that of the support 230 of the board 200, inside which the board 200 is positioned and fixed.

The recess 110 has a rear wall 111 and a side wall 112.

In the sensor-equipped brake pad 1 assembly, the board 200 is interposed between the rear plate 100 in the recess 110 and the block of friction material 300.

Due to the mechanical working operations carried out on the rear plate 200 for the creation of the recess 110, and to the strains generated in the support 230 of the board 200 during the silk-screen printing operations of the printed circuit 220 components, between the rear wall 111 of the recess 110 and the rear face 231 of the support 230, there is a gap 250.

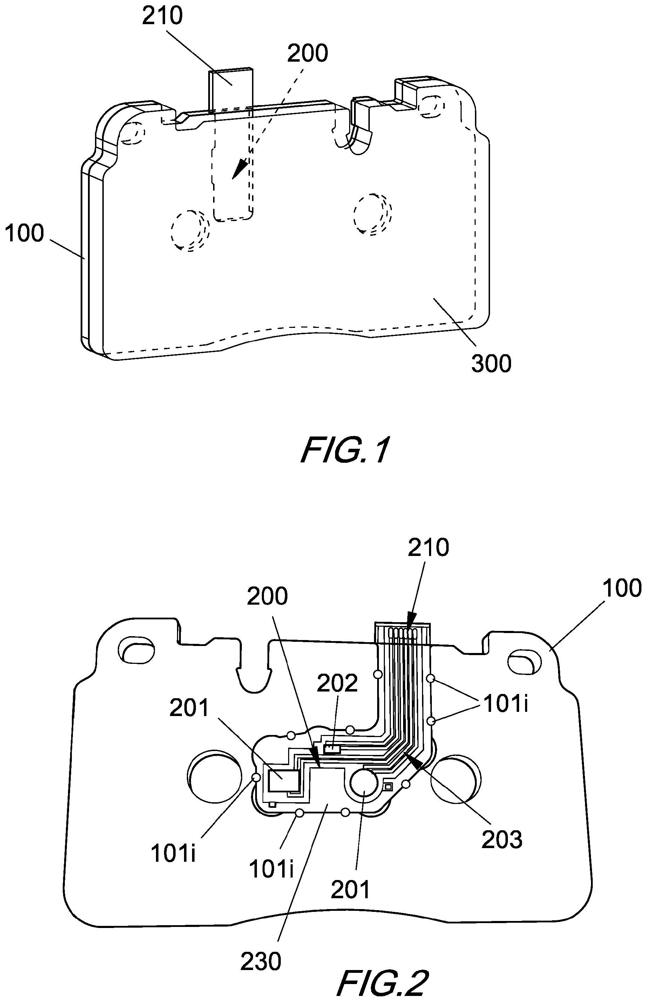

In the conventional solution for fixing the board 200 to the rear plate 100 depicted in figure 2, the board 200 is fixed with a plurality of welding spots 101 distributed along the edges of the support 230.

When the board 200 is subjected to the operating stresses of the braking system through the block of friction material 300, it is experimentally verified that the support 230, which does not adhere perfectly to the rear wall 111 of the recess 110, yields elastically into the gap 250 until the rear face 231 engages with the bottom 111, altering the accuracy of the readings of the piezometric force sensors 201.

Advantageously and innovatively, according to the present invention, the printed circuit board 200 is provided with structural stiffening means, which prevent the strain under load of the support 230 in the gap 250 created in the recess 110.

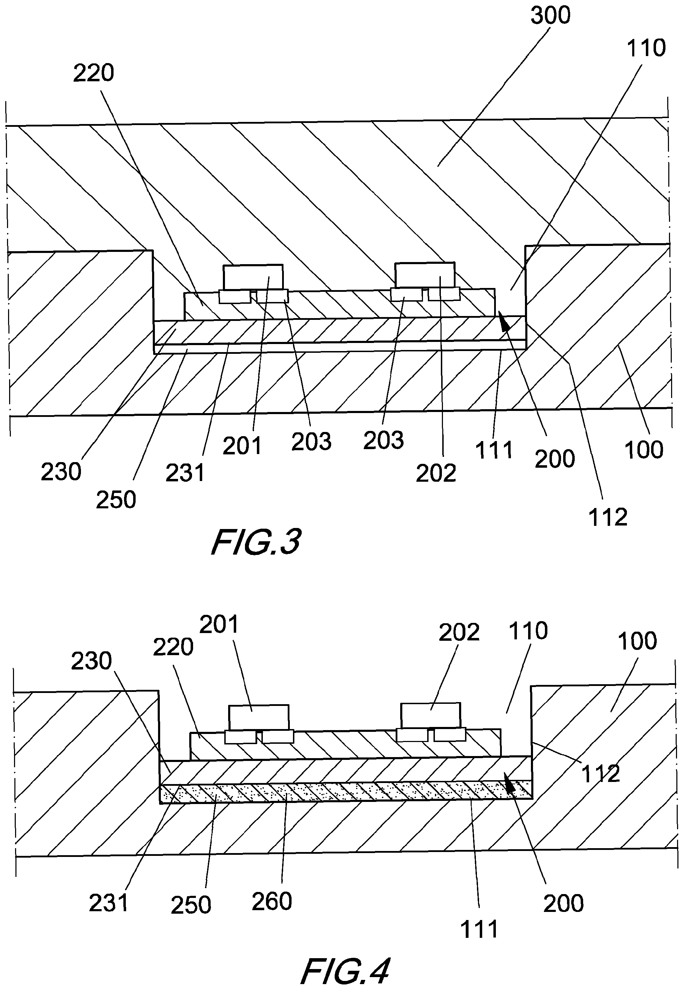

Advantageously, in a first embodiment, shown in figure 4, these structural stiffening means are configured and disposed to at least partly occupy the gap 250, and to rigidly connect the printed circuit board 200 to the rear wall 111 of the recess 110.

These structural stiffening means comprise a filler material 260 for filling the gap 250, typically a sealant, typically an adhesive material.

This adhesive material must be adapted to the surfaces present and must have stable thermomechanical characteristics due to the fact that the brake pad is subjected to mechanical and thermal stresses, first in production, then in use.

Epoxy and silicone adhesive materials have been found suitable for use.

The use of a filler material 260, typically a sealant, typically an adhesive material, for filling the gap 250 between the rear support 100 and the printed circuit board 200, advantageously fixes the rear support 100 to the board 200, constitutes a rigid joint which prevents the bending of the support 230 of the board 200, by sealing the gap 250, creates a barrier against infiltration from the external environment between the rear support 100 and the board 200.

Advantageously, the same results can be obtained by using structural adhesive tapes. Advantageously, in an embodiment, the filler material 260 for filling the gap 250 is produced by sintering.

Sintering is the process of compacting and forming a solid mass of material by heat and pressure, without reaching its liquefying point.

In this embodiment of the present invention, the process provides for the spreading on the bottom 111 of the recess 110 of a special paste with metal grains, typically silver grains, prior to the positioning of the board 200 in the recess 110.

By subsequently and suitably operating with a correct combination of pressure and temperature, the metal paste undergoes an atomic diffusion of the silver atoms in the grains, which melt together and saturate the residual volume of the gap 250 between the recess 110 and the board 200; the filler material 260 thus formed constitutes a rigid joint having metallic physical characteristics, with a very high melting point and good thermal resistance, between the board 200 and the rear support 100.

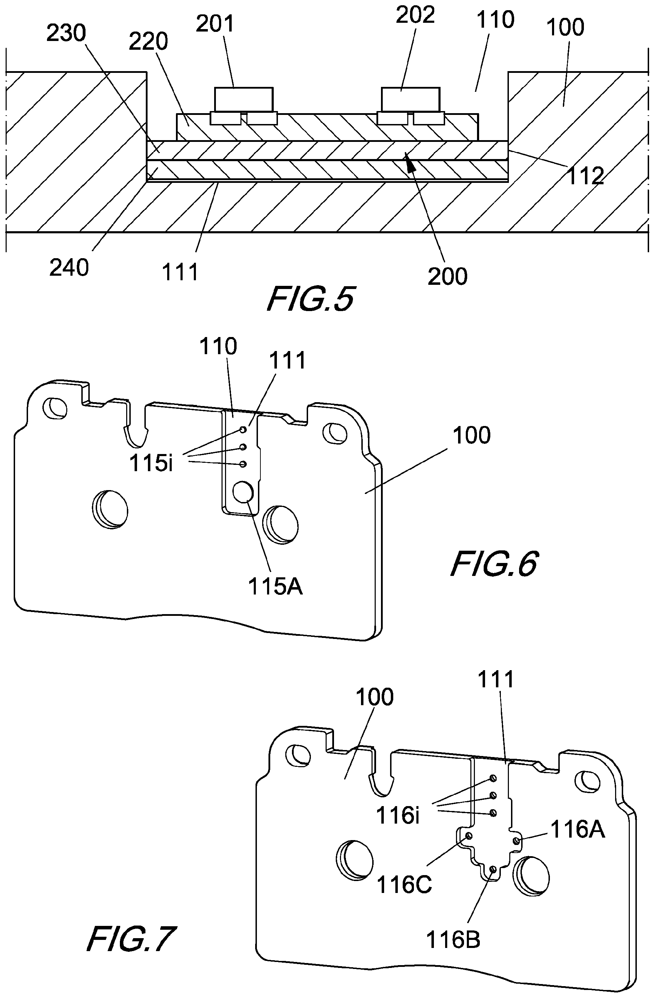

In an embodiment, shown in figure 5, the structural stiffening means for stiffening the board 200 comprise a rigid substrate 240 of the support 230 of the board 200: the thickness and rigidity of the rigid substrate 240, which are added to the physical characteristics of the support 230, counteract the strain under operating load of the board 200, by ensuring the consistency of the information collected and the data transmitted by the sensors 201 and 202.

Typically, the support 230 incorporates the rigid substrate 240; typically, the rigid substrate 240 includes a rigid plate, for example, but not necessarily made of stainless steel with a thickness between 3 mm and 10 mm.

In an embodiment, shown in figure 6, the structural stiffening means for stiffening the board 200 comprise one or more discrete elements 115 i located on the bottom 111 in the recess 110 of the rear support 100, which are created through a differential machining of the support 100: advantageously, at least one discrete element 115 A is located at the position of at least one force sensor 201 on the board 200.

The creation of discrete elements 115 i on the bottom 111 of the recess 110, and advantageously of at least one element 115 A at the position of at least one sensor 201 on the board 200, punctually reduces and counteracts the strain of the board 200 under the braking operating loads, contributing to a correct reading of the stresses by the sensor 201.

In an embodiment, shown in figure 7, the structural stiffening means for stiffening the board 200 comprise one or more discrete fixing points 116 i located on the bottom 111 in the recess 110 of the rear support 100, which are created through a differentiated mechanical working of the support 100: advantageously, at least one or more discrete points 116 A, B, C are positioned very close and around the position of at least one force sensor 201 on the board 200.

The creation of discrete fixing points 116 i on the bottom 111 of the recess 110 and, advantageously, at least one or more discrete fixing points 116 A, B, C positioned very close and around the position of at least one sensor 201 on the board 200, punctually reduces and counteracts the strain of the board 200 under the braking operating loads, contributing to a correct reading of the stresses by the sensor 201.

Advantageously, such one or more discrete fixing points 116 i comprise pins, screws, rivets or welding solutions.

The present invention also claims a method for producing a sensor-equipped brake pad for the braking system of a motor vehicle, comprising a printed circuit board, a rear support plate having a recess wherein the board is fixed, at least one force sensor mounted on the board, a block of friction material mounted on the rear plate, wherein the board is interposed between the rear plate and the block of friction material, and wherein structural stiffening means for stiffening the board are provided, such as alternatively and/or in combination:
a. structural stiffening means configured and disposed to at least partly occupy the gap between the rear plate and the board;
b. structural stiffening means configured and disposed to rigidly connect the board to the rear wall;
c. structural stiffening means comprising a rigid substrate of the board, wherein such rigid substrate includes a steel plate with a thickness between 3 mm and 10 mm;
d. structural stiffening means comprising a differential machining of the support plate for the creation of discrete elements at the position of the seat of the force sensors of the board;
e. structural stiffening means comprising a differential machining of the support plate for the creation of discrete fixing points at and around the position of the seat of the force sensors of the board.

The operation of a sensor-equipped brake pad for the braking system of a motor vehicle, comprising a printed circuit board according to the invention, is evident from what has been described and depicted.

In practice, it has been found that a sensor-equipped brake pad for the braking system of a motor vehicle, comprising a printed circuit board according to the invention, is particularly advantageous for the complete adherence of the board to the rear plate.

Another advantage of the invention is that of producing a sensor-equipped brake pad comprising a printed circuit board that ensures a greater resistance to deformation of the board under the operating stresses of the braking system.

The value of the invention is supported by the various simulations carried out.

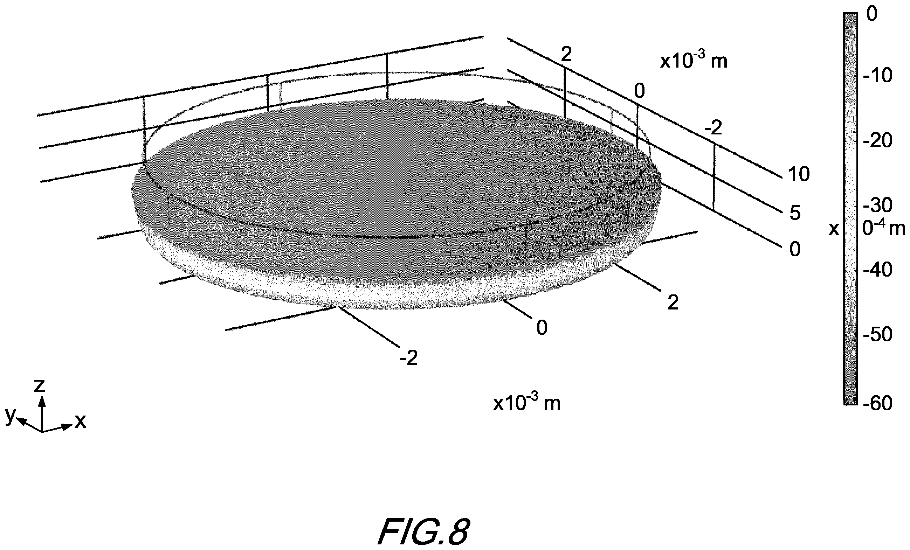

With reference to figure 8, the simulation of a pure compression force (in the case depicted, equal to 100 N) applied to the upper face of a disk-shaped piezoelectric sensor, is shown. Mechanical strain makes the disk thinner and increases the upper face area. The theoretical calculations of the expected electric potential resulting from this stress agree with the result of the simulation. In particular, given the polarization along the z axis, the polarity of the upper face is negative. Consequently, the compression force of the piezoelectric sensor results in a negative electric potential (in the case depicted, equal to -60 V).

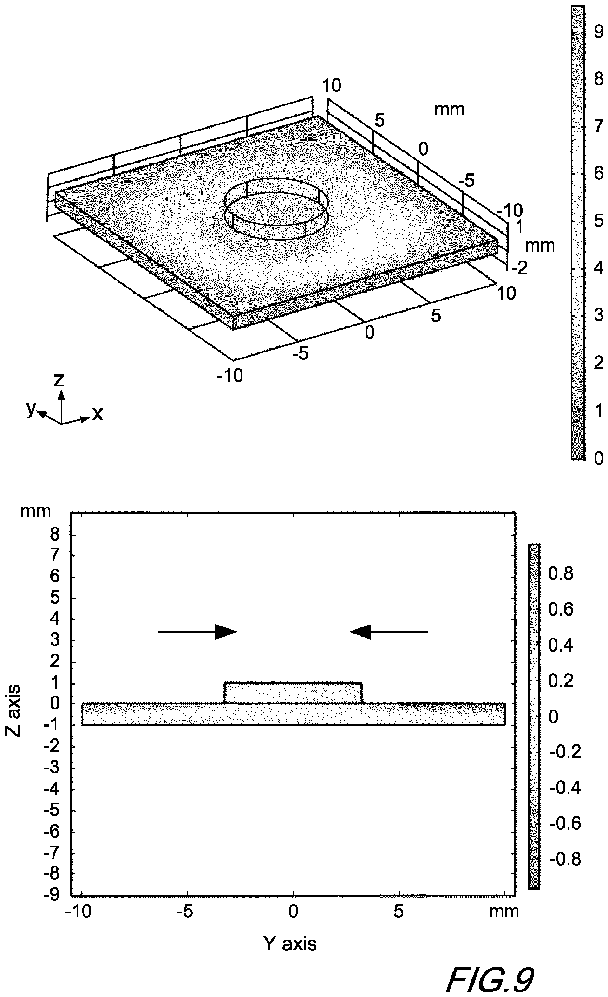

With reference to figure 9, when the compression force is applied to the upper face of the disk-shaped piezoelectric sensor (in the specific case, a compression force equal to 100 N along the axis -z), the steel plate tends to collapse under the load inducing a strain of the disk making it slightly thicker and with a contraction of the upper face surface. These strains result in a positive polarity of the upper face (in the specific case, 169.27 V), opposite to that expected by a compressive stress. This is the typical case of a steel plate less than 3 mm thick. The results indicate that the sign and the amplitude of the signal are close to the ideal case as the thickness of the steel plate increases.

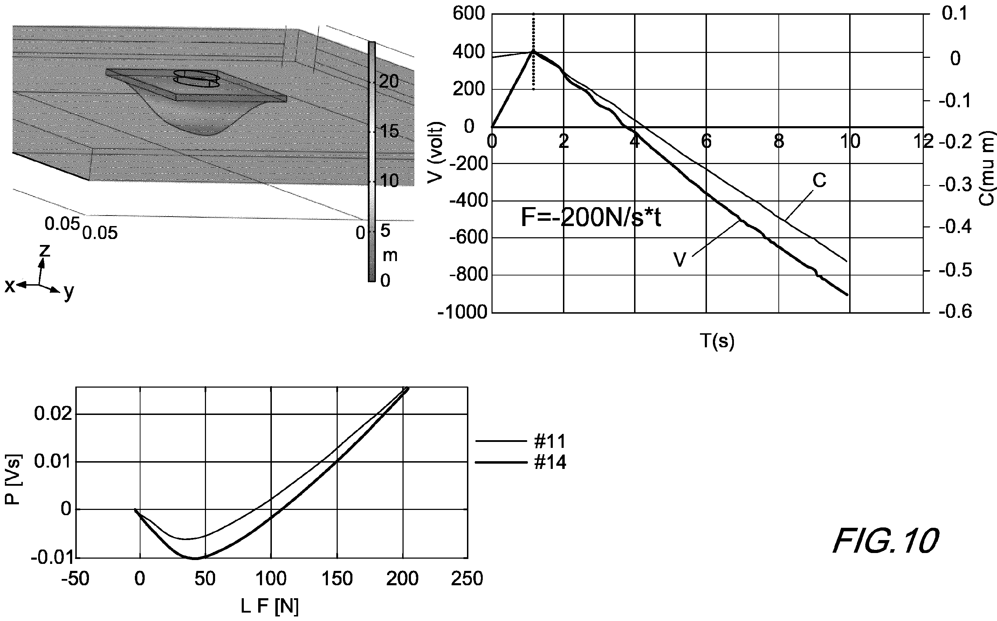

With reference to figure 10, the two figures at the top show the simulation, the figure at the bottom shows the experimental data.

In the simulation, a compression force F increasing as time t increases is applied to the upper face of the piezoelectric sensor. The compression C (understood as the distance between the two faces of the sensor) of the piezoelectric sensor, and the electrical voltage V are measured. The result of the simulation reproduces the typical experimental data obtained from tests carried out on a piezoelectric pressure sensor mounted on a printed circuit board provided with a stainless-steel support fixed perimetrically by spot welding to a rear support metal plate ideally rigid and separated by a 20-micron gap from the stainless-steel support. It can be seen that the signal inversion point P as the load L varies is the result of the contact between the stainless-steel support and the ideally rigid rear support metal plate, which eventually changes the way in which the piezoelectric sensor deforms.

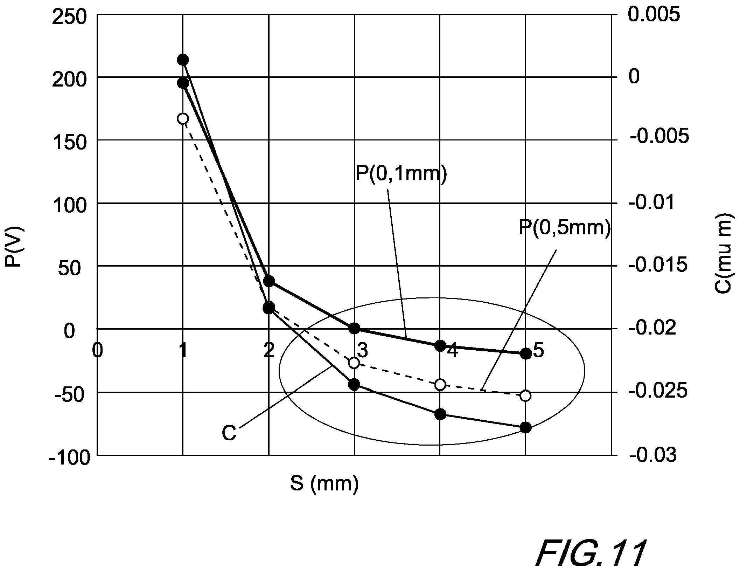

With reference to figure 11, the simulation shows that for the thickness S (on the abscissa) of the stainless-steel support of the printed circuit board greater than 3 mm, the signal P assumes the correct sign.

A sensor-equipped brake pad comprising a printed circuit board thus designed is susceptible to numerous modifications and variations, all of which fall within the scope of the inventive concept as defined by the claims; all the details may furthermore be replaced with technically equivalent elements.

In practice, the materials used, as well as the dimensions, may be any according to requirements and the state of the art.

## Claims

1. A sensor-equipped brake pad (1) for the braking system of a motor vehicle, comprising a printed circuit board (200), a rear support plate (100) having a recess (110) in which said printed circuit board (200) is fixed, at least one force sensor (201) mounted on said printed circuit board (200), a block of friction material (300) mounted on said rear plate (100), wherein said printed circuit board (200) is interposed between said rear plate (100) and said block of friction material (300), **characterised in that** it comprises a structural stiffening means for said printed circuit board (200).

2. The sensor-equipped brake pad (1) for the braking system of a motor vehicle according to claim 1, wherein said recess (110) has a rear wall (111) and a side wall (112), wherein said printed circuit board (200) has a rear face (231) delimiting a gap (250) with said rear wall (111), **characterised in that** said structural stiffening means is configured and disposed so as to at least partly occupy said gap (250).

3. The sensor-equipped brake pad (1) for the braking system of a motor vehicle according to claim 2, **characterised in that** said structural stiffening means is configured and disposed so as to rigidly connect said printed circuit board (200) to said rear wall (111).

4. The sensor-equipped brake pad (1) for the braking system of a motor vehicle according to claim 1, **characterised in that** said structural stiffening means comprises a rigid substrate (240) of said printed circuit board (200).

5. The sensor-equipped brake pad (1) for the braking system of a motor vehicle according to the preceding claim, **characterised in that** said rigid substrate (240) includes a steel plate with a thickness comprised between 3 mm and 10 mm.

6. The sensor-equipped brake pad (1) for the braking system of a motor vehicle according to claim 3, **characterised in that** said structural stiffening means comprises a filler material (260) for filling said gap (250).

7. The sensor-equipped brake pad (1) for the braking system of a motor vehicle according to the preceding claim, **characterised in that** said filler material (260) is a sealant.

8. The sensor-equipped brake pad (1) for the braking system of a motor vehicle according to either of claims 6 and 7, **characterised in that** said filler material (260) is a glue or a metal sintering paste.

9. The sensor-equipped brake pad (1) for the braking system of a motor vehicle according to either of claims 2 and 3, **characterised in that** said structural stiffening means comprises one or more discrete elements (115 i).

10. The sensor-equipped brake pad (1) for the braking system of a motor vehicle according to claim 9, **characterised in that** said one or more discrete elements (115 i) are located at least at said at least one force sensor (201).

11. The sensor-equipped brake pad (1) for the braking system of a motor vehicle according to either of claims 2 and 3, **characterised in that** said structural stiffening means comprises one or more discrete fixing points (116 i).

12. The sensor-equipped brake pad (1) for the braking system of a motor vehicle according to the preceding claim, **characterised in that** said one or more discrete fixing points (116 i) surround said at least one force sensor (201).

13. The sensor-equipped brake pad (1) for the braking system of a motor vehicle according to the preceding claim, **characterised in that** said one or more discrete fixing points (116 i) comprise screws, rivets or welding solutions.

14. A method for producing a sensor-equipped brake pad for the braking system of a motor vehicle, comprising a printed circuit board, a rear support plate having a recess in which said printed circuit board is fixed, at least one force or temperature sensor mounted on said printed circuit board, a block of friction material mounted on said rear plate, wherein said printed circuit board is interposed between said rear plate and said block of friction material, **characterised in that** it comprises a structural stiffening means for said printed circuit board, namely, alternatively and/or in combination:
a. a structural stiffening means configured and disposed so as to ensure adherence between said rear plate and said printed circuit board;
b. a structural stiffening means configured and disposed so as to rigidly connect said printed circuit board to said rear plate;
c. a structural stiffening means comprising a rigid substrate of said printed circuit board, wherein said rigid substrate includes a steel plate with a thickness comprised between 3 mm and 10 mm;
d. a structural stiffening means comprising a differential machining of said rear support plate for the creation of discrete elements at the position of the seat of said at least one force sensor of said printed circuit board;
e. a structural stiffening means comprising a differential machining of said rear support plate for the creation of discrete fixing points at and around the position of the seat of said at least one force sensor of said printed circuit board.

## Patentansprüche

1. Eine mit Sensoren ausgestattete Bremsbelag (1) für das Bremssystem eines Kraftfahrzeugs, umfassend eine Leiterplatte (200), eine hintere Trägerplatte (100) mit einer Vertiefung (110), in der die genannte Leiterplatte (200) befestigt ist, mindestens einen Kraftsensor (201), der auf der genannten Leiterplatte (200) montiert ist, einen Reibmaterialblock (300), der auf der hinteren Trägerplatte (100) angebracht ist, wobei die genannte Leiterplatte (200) zwischen der hinteren Trägerplatte (100) und dem Reibmaterialblock (300) angeordnet ist, **dadurch gekennzeichnet, dass** sie ein strukturelles Versteifungsmittel für die genannte Leiterplatte (200) umfasst.

2. Der mit Sensoren ausgestattete Bremsbelag (1) für das Bremssystem eines Kraftfahrzeugs nach Anspruch 1, wobei die genannte Vertiefung (110) eine Rückwand (111) und eine Seitenwand (112) aufweist, wobei die genannte Leiterplatte (200) eine Rückseite (231) hat, die mit der genannten Rückwand (111) einen Spalt (250) begrenzt, **dadurch gekennzeichnet, dass** das genannte strukturelle Versteifungsmittel so konfiguriert und angeordnet ist, dass es den genannten Spalt (250) zumindest teilweise ausfüllt.

3. Der mit Sensoren ausgestattete Bremsbelag (1) für das Bremssystem eines Kraftfahrzeugs nach Anspruch 2, **dadurch gekennzeichnet, dass** das genannte strukturelle Versteifungsmittel so konfiguriert und angeordnet ist, dass es die genannte Leiterplatte (200) starr mit der genannten Rückwand (111) verbindet.

4. Der mit Sensoren ausgestattete Bremsbelag (1) für das Bremssystem eines Kraftfahrzeugs nach Anspruch 1, **dadurch gekennzeichnet, dass** das genannte strukturelle Versteifungsmittel ein starres Substrat (240) der genannten Leiterplatte (200) umfasst.

5. Der mit Sensoren ausgestattete Bremsbelag (1) für das Bremssystem eines Kraftfahrzeugs nach dem vorhergehenden Anspruch, **dadurch gekennzeichnet, dass** das genannte starre Substrat (240) eine Stahlplatte mit einer Dicke zwischen 3 mm und 10 mm umfasst.

6. Der mit Sensoren ausgestattete Bremsbelag (1) für das Bremssystem eines Kraftfahrzeugs nach Anspruch 3, **dadurch gekennzeichnet, dass** das genannte strukturelle Versteifungsmittel ein Füllmaterial (260) zum Füllen des genannten Spalts (250) umfasst.

7. Der mit Sensoren ausgestattete Bremsbelag (1) für das Bremssystem eines Kraftfahrzeugs nach dem vorhergehenden Anspruch, **dadurch gekennzeichnet, dass** das genannte Füllmaterial (260) ein Dichtungsmittel ist.

8. Der mit Sensoren ausgestattete Bremsbelag (1) für das Bremssystem eines Kraftfahrzeugs nach einem der Ansprüche 6 und 7, **dadurch gekennzeichnet, dass** das genannte Füllmaterial (260) ein Klebstoff oder eine Metallsinterpaste ist.

9. Der mit Sensoren ausgestattete Bremsbelag (1) für das Bremssystem eines Kraftfahrzeugs nach einem der Ansprüche 2 und 3, **dadurch gekennzeichnet, dass** das genannte strukturelle Versteifungsmittel ein oder mehrere diskrete Elemente (115 i) umfasst.

10. Der mit Sensoren ausgestattete Bremsbelag (1) für das Bremssystem eines Kraftfahrzeugs nach Anspruch 9, **dadurch gekennzeichnet, dass** das genannte eine oder mehrere diskrete Elemente (115 i) sich mindestens an dem mindestens einen Kraftsensor (201) befinden.

11. Der mit Sensoren ausgestattete Bremsbelag (1) für das Bremssystem eines Kraftfahrzeugs nach einem der Ansprüche 2 und 3, **dadurch gekennzeichnet, dass** das genannte strukturelle Versteifungsmittel einen oder mehrere diskrete Befestigungspunkte (116 i) umfasst.

12. Der mit Sensoren ausgestattete Bremsbelag (1) für das Bremssystem eines Kraftfahrzeugs nach dem vorhergehenden Anspruch, **dadurch gekennzeichnet, dass** der genannte eine oder mehrere diskrete Befestigungspunkte (116 i) den mindestens einen Kraftsensor (201) umgeben.

13. Der mit Sensoren ausgestattete Bremsbelag (1) für das Bremssystem eines Kraftfahrzeugs nach dem vorhergehenden Anspruch, **dadurch gekennzeichnet, dass** der genannte eine oder mehrere diskrete Befestigungspunkte (116 i) Schrauben, Nieten oder Schweißlösungen umfassen.

14. Ein Verfahren zur Herstellung eines mit Sensoren ausgestatteten Bremsbelags für das Bremssystem eines Kraftfahrzeugs, umfassend eine Leiterplatte, eine hintere Trägerplatte mit einer Vertiefung, in der die genannte Leiterplatte befestigt ist, mindestens einen Kraft- oder Temperatursensor, der auf der genannten Leiterplatte montiert ist, einen Reibmaterialblock, der auf der hinteren Trägerplatte angebracht ist, wobei die genannte Leiterplatte zwischen der hinteren Trägerplatte und dem Reibmaterialblock angeordnet ist, **dadurch gekennzeichnet, dass** es ein strukturelles Versteifungsmittel für die genannte Leiterplatte umfasst, nämlich alternativ und/oder in Kombination:
a. Ein strukturelles Versteifungsmittel, das so konfiguriert und angeordnet ist, dass es die Haftung zwischen der hinteren Trägerplatte und der Leiterplatte sicherstellt;
b. Ein strukturelles Versteifungsmittel, das so konfiguriert und angeordnet ist, dass es die Leiterplatte starr mit der hinteren Trägerplatte verbindet;
c. Ein strukturelles Versteifungsmittel, das ein starres Substrat der Leiterplatte umfasst, wobei das genannte starre Substrat eine Stahlplatte mit einer Dicke zwischen 3 mm und 10 mm umfasst;
d. Ein strukturelles Versteifungsmittel, das eine differenzierte Bearbeitung der hinteren Trägerplatte zur Erstellung diskreter Elemente an der Position des Sitzes des mindestens einen Kraftsensors der Leiterplatte umfasst;
e. Ein strukturelles Versteifungsmittel, das eine differenzierte Bearbeitung der hinteren Trägerplatte zur Erstellung diskreter Befestigungspunkte an und um die Position des Sitzes des mindestens einen Kraftsensors der Leiterplatte umfasst.

## Revendications

1. Un patin de frein (1) équipé de capteurs pour le système de freinage d'un véhicule automobile, comprenant un circuit imprimé (200), une plaque de support arrière (100) ayant un évidement (110) dans lequel ledit circuit imprimé (200) est fixé, au moins un capteur de force (201) monté sur ledit circuit imprimé (200), un bloc de matériau de friction (300) monté sur ladite plaque arrière (100), ledit circuit imprimé (200) étant interposé entre ladite plaque arrière (100) et ledit bloc de matériau de friction (300), **caractérisé en ce qu'**il comprend un moyen de renforcement structurel pour ledit circuit imprimé (200).

2. Le patin de frein (1) équipé de capteurs pour le système de freinage d'un véhicule automobile selon la revendication 1, dans lequel ledit évidement (110) comprend une paroi arrière (111) et une paroi latérale (112), dans lequel ledit circuit imprimé (200) possède une face arrière (231) délimitant un espace (250) avec ladite paroi arrière (111), **caractérisé en ce que** ledit moyen de renforcement structurel est configuré et disposé de manière à occuper au moins partiellement ledit espace (250).

3. Le patin de frein (1) équipé de capteurs pour le système de freinage d'un véhicule automobile selon la revendication 2, **caractérisé en ce que** ledit moyen de renforcement structurel est configuré et disposé de manière à relier rigidement ledit circuit imprimé (200) à ladite paroi arrière (111).

4. Le patin de frein (1) équipé de capteurs pour le système de freinage d'un véhicule automobile selon la revendication 1, **caractérisé en ce que** ledit moyen de renforcement structurel comprend un substrat rigide (240) dudit circuit imprimé (200).

5. Le patin de frein (1) équipé de capteurs pour le système de freinage d'un véhicule automobile selon la revendication précédente, **caractérisé en ce que** ledit substrat rigide (240) comprend une plaque en acier d'une épaisseur comprise entre 3 mm et 10 mm.

6. Le patin de frein (1) équipé de capteurs pour le système de freinage d'un véhicule automobile selon la revendication 3, **caractérisé en ce que** ledit moyen de renforcement structurel comprend un matériau de remplissage (260) destiné à combler ledit espace (250).

7. Le patin de frein (1) équipé de capteurs pour le système de freinage d'un véhicule automobile selon la revendication précédente, **caractérisé en ce que** ledit matériau de remplissage (260) est un agent d'étanchéité.

8. Le patin de frein (1) équipé de capteurs pour le système de freinage d'un véhicule automobile selon l'une des revendications 6 et 7, **caractérisé en ce que** ledit matériau de remplissage (260) est une colle ou une pâte de frittage métallique.

9. Le patin de frein (1) équipé de capteurs pour le système de freinage d'un véhicule automobile selon l'une des revendications 2 et 3, **caractérisé en ce que** ledit moyen de renforcement structurel comprend un ou plusieurs éléments discrets (115 i).

10. Le patin de frein (1) équipé de capteurs pour le système de freinage d'un véhicule automobile selon la revendication 9, **caractérisé en ce que** ledit ou lesdits éléments discrets (115 i) sont situés au moins au niveau dudit au moins un capteur de force (201).

11. Le patin de frein (1) équipé de capteurs pour le système de freinage d'un véhicule automobile selon l'une des revendications 2 et 3, **caractérisé en ce que** ledit moyen de renforcement structurel comprend un ou plusieurs points de fixation discrets (116 i).

12. Le patin de frein (1) équipé de capteurs pour le système de freinage d'un véhicule automobile selon la revendication précédente, **caractérisé en ce que** ledit ou lesdits points de fixation discrets (116 i) entourent ledit au moins un capteur de force (201).

13. Le patin de frein (1) équipé de capteurs pour le système de freinage d'un véhicule automobile selon la revendication précédente, **caractérisé en ce que** ledit ou lesdits points de fixation discrets (116 i) comprennent des vis, des rivets ou des solutions de soudage.

14. Un procédé de fabrication d'un patin de frein équipé de capteurs pour le système de freinage d'un véhicule automobile, comprenant un circuit imprimé, une plaque de support arrière ayant un évidement dans lequel ledit circuit imprimé est fixé, au moins un capteur de force ou de température monté sur ledit circuit imprimé, un bloc de matériau de friction monté sur ladite plaque arrière, ledit circuit imprimé étant interposé entre ladite plaque arrière et ledit bloc de matériau de friction, **caractérisé en ce qu'**il comprend un moyen de renforcement structurel pour ledit circuit imprimé, notamment, alternativement et/ou en combinaison :
a. Un moyen de renforcement structurel configuré et disposé de manière à assurer l'adhérence entre ladite plaque arrière et ledit circuit imprimé ;
b. Un moyen de renforcement structurel configuré et disposé de manière à relier rigidement ledit circuit imprimé à ladite plaque arrière ;
c. Un moyen de renforcement structurel comprenant un substrat rigide dudit circuit imprimé, ledit substrat rigide incluant une plaque en acier d'une épaisseur comprise entre 3 mm et 10 mm ;
d. Un moyen de renforcement structurel comprenant un usinage différentiel de ladite plaque de support arrière afin de créer des éléments discrets à l'emplacement du logement dudit au moins un capteur de force du circuit imprimé ;
e. Un moyen de renforcement structurel comprenant un usinage différentiel de ladite plaque de support arrière afin de créer des points de fixation discrets à et autour de l'emplacement du logement dudit au moins un capteur de force du circuit imprimé.
